# EUROPÄISCHE PATENTANMELDUNG

(11) **EP 3 903 568 A1**
(43) Veröffentlichungstag der Anmeldung: **03.11.2021**
(21) Anmeldenummer: 21169448.4
(22) Anmeldetag: 20.04.2021
(51) Int. Cl.: A01G 9/02, A47G 7/04

(54) **HALTERSYSTEM ZUR VERTIKALBEGRÜNUNG EINER WAND UND VERTIKALBEGRÜNUNGSSYSTEM**

(30) Priorität: 30.04.2020 DE 102020111871
(71) Anmelder: Vertiko GmbH, 79256 Buchenbach-Himmelreich (DE)
(72) Erfinder: Brandhorst, Stefan, 79199 Kirchzarten (DE)
(74) Vertreter: Brötz, Helmut

(57) **Zusammenfassung**

Die Erfindung betrifft ein Haltersystem (1) sowie ein Vertikalbegrünungssystem (28) zur Vertikalbegrünung einer Wand. Um herkömmliche Halter, die für Vertikalbegrünungssysteme geeignet oder bestimmt sind vorteilhaft weiterzubilden, wird vorgeschlagen, dass das Haltersystem (1) zumindest eine Halterbasis (2) zur Halterung an einer Wand und zumindest einen ersten Halterarm (3) aufweist, wobei die Halterbasis (2) und der erste Halterarm (3) gesonderte Bauteile sind, die lösbar oder fest miteinander zu einem Halter (6) verbindbar oder verbunden sind. Zur vorteilhaften Weiterbildung von Vertikalbegrünungssystemen (28) wird vorgeschlagen, dass diese zumindest eine Stützvorrichtung (29) und ein erfindungsgemäßes Halterungssystem (1) umfassen.

## Beschreibung

### Gebiet der Technik

Die vorliegende Erfindung betrifft gemäß einem ersten Aspekt ein Haltersystem, welches vorzugsweise zur Vertikalbegrünung von Wänden dienen kann. Gemäß einem zweiten Aspekt betrifft die vorliegende Erfindung ein Vertikalbegrünungssystem, vorzugweise zur Vertikalbegrünung einer Wand mittels Kletterpflanzen.

### Stand der Technik

Vertikalbegrünungen werden in boden- und wandgebundene Begrünungen unterschieden. Für erstere werden Kletterpflanzen verwendet. Diese Pflanzen finden Halt an Mauern, Felsen, anderen Pflanzen oder Klettergerüsten. Kletterpflanzen, die keine selbsttragenden Pflanzenteile, wie bspw. einen Stamm, besitzen, entwickeln Strategien, um sich festzuhalten. Dabei gibt es unterschiedliche Kletterstrategien. Begrünungen mit Kletterpflanzen werden wiederum in Selbstklimmer und Gerüstkletterpflanzen eingeteilt. Während selbstklimmende Pflanzen durch ihre lichtfliehenden Triebe Schäden an Bauwerken verursachen können, zählt man Gerüstkletterpflanzen zum leitbaren Bewuchs.

Kletterhilfen für Gerüstkletterpflanzen bestehen aus den Komponenten Verankerung (bspw. Dübel, Anker usw.), Halter und Stützkonstruktion. Dabei bilden die Halter, die herkömmlich einteilig ausgeführt sind, das Bindeglied zwischen der Verankerung und der Stützkonstruktion. Aufgrund moderner Bauweisen werden Halter mit zunehmender Länge benötigt. Dies liegt daran, dass die Halter in einer tragenden Wand verankert werden müssen und dass tragende Wände zunehmend mit einer Außendämmung und/oder mit einer hinterlüfteten Fassade ausgestattet werden. Da die freien Halterenden über die Außenseite der Fassade um einen für die Vertikalbegrünung gewünschten Abstand, bspw. in der Größenordnung von 10 cm bis 20 cm, hervorstehen sollen, muss bei der Berechnung der Halterlänge die Dicke einer Dämmung bzw. die Dicke einer Hinterlüftung zu dem gewünschten Fassadenabstand hinzugerechnet werden. Mechanisch betrachtet ist ein Halter ein Kragarm, der an seinem einen Längsende befestigt ist und auf dessen anderes Längsende eine (häufig vertikale) Querkraft einwirkt. Die Wirkung eines Kragarmes ist mit einem Hebel vergleichbar, jedoch mit dem Unterschied, dass ein von der Querkraft bewirktes Drehmoment nicht um einen Drehpunkt herum wirkt, sondern um eine drehsteife Anbindung des Kragarmes. Die Querkraft bzw. das Drehmoment belasten den Kragarm und können ihn, abhängig von seiner Steifigkeit, verformen. Je länger ein Kragarm bei unverändertem Querschnitt ist, desto weniger Last kann er aufnehmen. Herkömmliche vorgefertigte Halter von Vertikalbegrünungssystemen können für viele moderne Bauweisen nicht eingesetzt werden.

### Zusammenfassung der Erfindung

Vor diesem Hintergrund liegt der Erfindung die Aufgabe zugrunde, herkömmliche Halter, die für Vertikalbegrünungssysteme geeignet oder bestimmt sind, und Vertikalbegrünungssysteme vorteilhaft weiterzubilden. Insbesondere wird angestrebt, die vorangehend erläuterten Nachteile zumindest teilweise oder möglichst vollständig zu beseitigen. Weiter wird insbesondere angestrebt, ein vielseitiges, dabei einfach aufgebautes, insbesondere stabiles und insbesondere optisch ansprechendes Vertikalbegrünungssystem sowie dafür geeignete Halter bereitzustellen.

Zur Lösung der Aufgabe schlägt die Erfindung gemäß ihrem ersten Aspekt ein Haltersystem, insbesondere zur Vertikalbegrünung einer Wand, vor, wobei das Haltersystem zumindest eine Halterbasis, insbesondere zur Halterung an einer Wand, und zumindest einen ersten Halterarm aufweist, wobei die Halterbasis und der erste Halterarm gesonderte Bauteile sind, die lösbar oder fest miteinander zu einem Halter verbindbar oder verbunden sind. Das Haltersystem kann somit zum Beispiel vor einem Gebrauch eine lose Kombination des ersten Halterarms mit der ersten Halterbasis umfassen oder durch eine solche Kombination verwirklicht sein. Andererseits kann das Haltersystem einen für den Gebrauch bereits vorbereiteten Halter, der eine Halterbasis und einen damit fest oder lösbar verbundenen Halterarm aufweist, umfassen oder durch einen solchen vorbereiteten Halter verwirklicht sein. Auch mehrere vorbereitete Halter können vorhanden sein. Ein von der Erfindung vorgeschlagenes Haltersystem und damit bereitgestellte Halter bieten für ein Vertikalbegrünungssystem zahlreiche Vorteile. Wie noch beschrieben wird, resultiert schon aus einer Verbindbarkeit und somit Kombinierbarkeit von je einem Halterarm mit je einer Halterbasis zur Bereitstellung von Haltern eine im Vergleich zum Stand der Technik größere Vielfalt an Verwendungsmöglichkeiten bei zugleich einfachem Aufbau. Die Vielfalt an Verwendungsmöglichkeiten nimmt weiter zu, wenn die Verbindung lösbar gestaltet ist, so dass auch ein nachträglicher Austausch von Halterarmen an einer Halterbasis möglich ist. Je nach Ausführung besteht vorteilhaft die Möglichkeit, dass der oder die Halter bzw. ihre Komponenten als Bestandteil eines Vertikalbegrünungssystems je nach Anforderungen mit der erforderlichen Länge und Stabilität ausgestattet oder aus einem vorzugsweise zu dem Haltersystem gehörenden Sortiment verschiedener Komponenten gewählt werden können. An einem bereits montierten Vertikalbegrünungssystem kann dies je nach Ausführung auch nachträglich, bspw. bei sich ändernden Anforderungen, und ohne Austausch einer betroffenen Halterbasis erfolgen, indem nur der Halterarm ausgetauscht wird. Als weiterer Vorteil können Halterarme, je nach bestehenden Anforderungen, auch optisch ansprechend ausgebildet und angeordnet werden. Ein erfindungsgemäßes Haltersystem kann vorzugsweise als Bestandteil oder zur Verwendung für bodengebundene Vertikalbegrünungssysteme dienen, bei denen wegen des nach oben, also vertikal, gerichteten Wachstums Kletterpflanzen zur Vertikalbegrünung einer Wand dienen und in einem wandnahen Boden wurzeln.

Es bestehen zahlreiche Möglichkeiten zur vorteilhaften Weiterbildung.

Zweckmäßig ist vorgesehen, dass die Halterbasis Basishalterungsmittel, mittels denen die Halterbasis an einer Wand halterbar ist, und Basisverbindungsmittel aufweist, dass der erste Halterarm einen Armanschluss und Armverbindungsmittel aufweist, dass die Halterbasis und der erste Halterarm mittels der Basisverbindungsmittel und der Armverbindungsmittel miteinander zu dem Halter verbindbar oder verbunden sind, so dass die Basishalterungsmittel und der Armanschluss voneinander beabstandet und insbesondere an zueinander entgegengesetzten Enden des Halters angeordnet sind.

Vorteilhaft besteht die Möglichkeit, dass das Haltersystem zumindest einen zweiten Halterarm umfasst, der als gesondertes Bauteil ausgebildet ist und der einen Armanschluss und Armverbindungsmittel aufweist, dass die Halterbasis und der zweite Halterarm wahlweise zu dem ersten Halterarm mittels der Basisverbindungsmittel und der Armverbindungsmittel lösbar oder fest miteinander zu einem Halter verbindbar oder verbunden sind, so dass die Basishalterungsmittel und die Anschlussmittel voneinander beabstandet und insbesondere an zueinander entgegengesetzten Enden des Halters angeordnet sind, wobei der erste Halterarm und der zweite Halterarm zueinander unterschiedlich ausgeführt sind und insbesondere zueinander unterschiedliche Armlängen aufweisen. Es versteht sich, dass das Haltersystem auch mehr als zwei Halterarme aufweisen kann und dass sich auch diese Halterarme je nach Bedarf jeweils in ihrer Länge, insbesondere in ihrem Abstand, der zwischen ihren Anschlussmitteln und ihren Armverbindungsmitteln besteht, voneinander unterscheiden können. Unter diesem Gesichtspunkt kann es sich bei dem Haltersystem um ein Baukastensystem handeln. Dieses kann zum Beispiel verschiedene Halterarme beinhalten, die sich voneinander in ihrer Form, insbesondere in ihrer Querschnittsform, und/ oder in ihrer Größe, insbesondere in ihrer Länge, unterscheiden. Es besteht vorzugsweise die Möglichkeit, dass verschiedene Halterarme wahlweise mit einer Halterbasis oder mit mehreren, zueinander gleich ausgeführten Halterbasen verbindbar oder verbunden sind. Dies kann im Hinblick auf eine flexibel wählbare Ausführung, insbesondere Länge, von Haltern zum Beispiel von Vorteil sein, wenn ein Vertikalbegrünungssystem an einer Wand, die Unebenheiten oder bspw. Vorsprünge oder Einbuchtungen aufweist, angebracht werden soll. Es versteht sich andererseits, dass ein Haltersystem alternativ oder kombinativ mehrere zueinander gleiche Halterarme aufweisen kann. Auch besteht die Möglichkeit, dass ein Haltersystem mehrere zueinander verschiedene Halterbasen umfasst.

Vorzugsweise weist ein Halterarm einen aus einem Metallprofil hergestellten ersten Längenabschnitt und vorzugsweise einen zweiten Längenabschnitt auf, der insbesondere einstückig aus dem gleichen Metallprofil hergestellt ist. Das Haltersystem kann außerdem eine gewünschte Anzahl von Halterbasen beinhalten. Eine Vereinfachung des Haltersystems kann dadurch erreicht werden, dass die Halterbasen zueinander gleich ausgeführt sind und dass jeder Halterarm, unabhängig von seiner im Übrigen individuellen Gestaltung mit einer solchen Halterbasis verbunden werden kann. Eine solche Standardisierung innerhalb des Haltersystems führt zu seiner Vereinfachung und auch zu einer vereinfachten Montage.

Eine bevorzugte Ausgestaltung besteht darin, dass die Basisverbindungsmittel einen Wandbereich der Halterbasis mit einer oder mehreren darin ausgebildeten Durchgangsöffnungen aufweisen, dass die Armverbindungsmittel einen Wandbereich des Halterarms mit einer oder mehreren darin ausgebildeten Durchgangsöffnungen aufweisen und dass sich die Basisverbindungsmittel und die Armverbindungsmittel zueinander ausrichten lassen, so dass eine oder mehrere Durchgangsöffnungen der Basisverbindungsmittel mit je einer Durchgangsöffnung der Armverbindungsmittel überlappt oder überlappen. Je nach Ausgestaltung, insbesondere je nach gewählter Anzahl und Anordnung von Durchgangsöffnungen, bietet dies ebenfalls vorteilhaft die Möglichkeit, in Bezug auf die Längsrichtung des Halterarmes einen Abstand zwischen den Basishalterungsmitteln und dem Armanschluss stufenweise zu variieren bzw. vor der Verbindung der Halterbasis mit dem Halterarm einem jeweiligen Bedarf gerecht zu wählen. Zweckmäßig kann vorgesehen sein, dass das Haltersystem Verbindungselemente aufweist, mittels denen die Basisverbindungsmittel und die Armverbindungsmittel miteinander verbindbar oder verbunden sind, wobei es sich bei den Verbindungselementen insbesondere um Nieten und/oder um Schrauben mit Muttern handelt. Mit der eingeschlossenen Möglichkeit, dass die Basisverbindungsmittel einer Halterbasis und die Armverbindungsmittel eines Halterarms miteinander mittels eines oder mehrerer Verbindungselemente verbunden sind, betrifft das erfindungsgemäße Haltersystem unter anderem auch einen für den Gebrauch vormontierten Halter.

Eine vorteilhafte Weiterbildung wird auch darin gesehen, dass der erste Halterarm und/oder der zweite Halterarm zumindest einen ersten Längenabschnitt aufweist, an dem die Armverbindungsmittel ausgebildet sind und dessen zu seiner Längsrichtung senkrechter Querschnitt in zwei zueinander senkrechten Querschnittsrichtungen zueinander unterschiedliche Abmessungen hat, wobei insbesondere vorgesehen ist, dass die Querschnittsform ein Rechteck ist, dessen Länge zumindest das Doppelte, insbesondere zumindest das Dreifache, insbesondere zumindest das Vierfache, insbesondere zumindest das Zehnfache, seiner Breite beträgt. Ein Halter, der einen solchen Halterarm aufweist, kann auch durch die Art seiner Anbringung an einer tragenden Wand an verschiedenen Traglasten angepasst werden. Wenn eine vergleichsweise hohe Traglast einwirkt, kann der Halterarm vorzugsweise an einer tragenden Wand vorzugsweise so montiert werden, dass sich die größte Querschnittsabmessung (insbesondere die Längsrichtung eines Rechteck-Querschnittes) vertikal erstreckt, wodurch das Flächenträgheitsmoment und damit die gewünschte Biegesteifigkeit vergrößert werden kann. Dies erweist sich insbesondere im Hinblick auf die bei moderner Bauweise häufig eingesetzte Dämmung und Hinterlüftung von Fassadenelementen, welche eine größere Länge von Haltern erfordern, als vorteilhaft. Es besteht die Möglichkeit, dass ein Längsende des ersten Längenabschnitts, bei dem es sich um dasjenige von seinen beiden Längsenden handelt, das weiter von den Armverbindungsmitteln entfernt ist, den Armanschluss bildet oder einen Bestandteil des Armanschlusses bildet.

Zur zweckmäßigen Weiterbildung besteht auch die Möglichkeit, dass der erste Halterarm und/ oder der zweite Halterarm an einem Längsende, das von seinen Armverbindungsmitteln beabstandet ist, einen zweiten Längenabschnitt aufweist, der mit dem ersten Längenabschnitt verbunden ist und der sich in Bezug zu dem ersten Längenabschnitt abgewinkelt, insbesondere rechtwinklig abgewinkelt, erstreckt, und dass der zweite Längenabschnitt den Armanschluss oder einen Bestandteil des Armanschlusses ausbildet, wobei es sich bei dem Längsende insbesondere um das Längsende handelt, das von den beiden Längsenden weiter von den Armverbindungsmitteln entfernt ist. Es versteht sich, dass auch dieser Gedanke auf eine gewünschte größere Anzahl von Halterarmen übertragbar ist. Bei einer einfachen und insofern bevorzugten Ausgestaltung können der erste Längenabschnitt und der zweite Längenabschnitt einstückig aus einem Flachprofil, vorzugsweise aus Edelstahl, gebildet sein, wobei das Flachprofil an der Verbindung zwischen dem ersten und dem zweiten Längenabschnitt zur Erzielung ihrer Winkellage abgebogen ist. Je nach Ausgestaltung kann der Halterarm als Schwert bezeichnet werden.

Zur zweckmäßigen Ausgestaltung des Armanschlusses besteht die Möglichkeit, dass der Armanschluss eine oder mehrere Durchgangsöffnungen, die insbesondere in dem zweiten Längenabschnitt ausgebildet sind, aufweist und/ oder ein Innengewinde und/ oder ein Außengewinde aufweist und/ oder eine Klemm-einrichtung, insbesondere eine Klemmschelle oder eine Seilklemmeinrichtung, aufweist und/ oder eine Anlehnhilfseinrichtung, aufweist. Der Armanschluss dient zum Anschluss eines Halters an eine Stützeinrichtung oder an ein Stützelement, wie bspw. an einen Stab, der zum Beispiel vertikal orientiert ist. Der Begriff Anschluss kann dabei, je nach Ausführung des Anschlusses, unterschiedliche Bedeutungen haben. So kann bspw. der Anschluss als kraftschlüssige und/ oder formschlüssige Verbindung ausgeführt sein, so dass er in Vertikalrichtung und/ oder in Querrichtungen zur Kraftübertragung geeignet ist. Dabei besteht insbesondere die Möglichkeit, dass ein oder mehrere Halter die Gewichtskraft bspw. eines Stützelements oder einer Stützeinrichtung und von ggf. hieran emporrankenden Kletterpflanzen vollständig aufnehmen, so dass eine direkte Abstützung des Stützelements oder der Stützeinrichtung auf einem Boden nicht notwendig ist. Dies gilt in Verallgemeinerung auch für Stützvorrichtungen, die entsprechend den jeweiligen Anforderungen eine dafür passend gewählte Anzahl von Stützelementen und/oder Stützeinrichtungen umfassen können. Stäbe oder Rohre, die als Stützelement auf einem Boden stehen (der Begriff Boden schließt verschiedene Arten von Untergrund ein), können auch als Tragstäbe bzw. Tragrohre bezeichnet werden.

Insbesondere vor dem bekannten Hintergrund, dass Kletterpflanzen bei ihrem Wachstum mitunter im Laufe der Zeit und unbemerkt hohe Kräfte auf Kletterhilfen ausüben können, besteht auch die Möglichkeit, mittels einer Klemmeinrichtung die Klemmkraft bewusst so zu begrenzen, dass sie ausreicht, um ein Stützelement wie bspw. eine Seil zu tragen, dass sie aber bei Auftreten einer bestimmten höheren Last, die bspw. durch Pflanzenwachstum entstehen kann, nachgibt, d. h. eine Bewegung des Stützelements relativ zu der Klemmeinrichtung zulässt. Insofern kann eine Klemmeinrichtung auch als Überlastsicherung dienen.

Alternativ kommt an dem Armanschluss zum Beispiel ein loser Anschluss eines Stützelements oder einer Stützeinrichtung mittels Anlehnen in Betracht. Zu diesem Zweck kann bspw. ein Stab an den Armanschluss angelehnt sein, so dass durch diesen lockeren Anschluss keine oder fast keine Kraft in Vertikalrichtung übertragbar ist. Bei einem solchen losen Anschluss wird der Stab von dem Halter oder den Haltern gewichtsmäßig nicht getragen, sondern die Gewichtskraft kann vorzugsweise direkt in den Boden abgeführt werden, indem der Stab auf dem Boden steht.

Dies ermöglicht vorteilhaft den Anschluss von Stützelementen oder Stützeinrichtungen mit vergleichsweise hohem Gewicht, also bspw. von langen Stäben, und, sofern mehrere Halter eingesetzt werden, eine Vergrößerung ihres Zwischenabstands. Ein weiterer Vorteil eines losen Anschlusses wird darin gesehen, dass die Halter, da die Gewichtskraft direkt in den Boden abgeleitet werden kann, nur eine vergleichsweise (d. h. im Vergleich zu einem festen Anschluss) niedrigere Steifigkeit benötigen. Dies ermöglicht es einerseits, den Querschnitt der Halter vergleichsweise weniger biegesteif auszubilden, so dass die Halter geringeres Gewicht und Größe haben können und dadurch auch leichter montierbar sind. Ein weiterer Vorteil kann hier eine vergleichsweise geringere optische Auffälligkeit oder wahlweise sogar ein optisch ansprechendes Erscheinungsbild sein. Hinzu kommt als Vorteil, dass, wenn der Querschnitt der Halterarme vorgegeben ist, die Halterung je nach Ausführungsform auch so angeordnet werden kann, dass im Vergleich zu einer anderen Anordnung mit einer relativ dazu verdrehten Querschnittslage, in der Richtung der Gewichtskraft eine geringere Biegesteifigkeit resultiert. Darüber hinaus begünstigt ein loser Anschluss den Einsatz von Halteramen mit vergleichsweise größerer Armlänge.

Zum Anlehnen eines Stützelements oder einer Stützeinrichtung kann der Armanschluss eine Anlehnhilfseinrichtung aufweisen. Es kann sich zum Beispiel um ein Ringelement handeln, das einen Hohlquerschnitt aufweist, der größer als ein Querschnitt eines als Stützelement bspw. gewählten Stabes oder Seiles ist. Somit kann bspw. ein Stab bzw. ein Seil durch die Anlehnhilfseinrichtung hindurchlaufen und an einer Innenseite der Stützeinrichtung angelehnt werden, ohne von ihr getragen zu werden. Durch den mittels des Anlehnens erreichten losen Anschluss wird dennoch ein seitliches Umfallen der Stützeinrichtung vermieden. Betreffend eine ringförmige Anschlussaufnahme, die an Klemmeinrichtungen und Anlehnhilfseinrichtungen vorhanden sein kann, ist bevorzugt, dass diese am Ringumfang geöffnet werden kann, wodurch der Anschluss eines Stützelements oder einer Stützeinrichtung vereinfacht werden kann. Auch besteht die Möglichkeit, dass der Armanschluss bspw. eine Klemmschelle aufweist, die, abhängig von den Querschnittsabmessungen verschiedener Stützelemente oder Stützeinrichtungen, wahlweise als Klemmeinrichtung oder als Anlehnhilfseinrichtung dienen kann. Anstelle einer Klemmschelle kann zum Beispiel, je nach Anforderungen, eine Seilklemmeinrichtung vorgesehen sein.

Bei einer vorteilhaften Weiterbildung ist vorgesehen, dass der Armanschluss des ersten Halterarms und der Armanschluss des zweiten Halterarms zueinander gleich oder gleichartig gestaltet sind, dass an dem ersten Halterarm zwischen einem Bezugspunkt des Armanschlusses und einem Bezugspunkt der Armverbindungsmittel ein erster Abstand besteht, dass an dem zweiten Halterarm zwischen einem Bezugspunkt des Armanschlusses, der dem zuvor genannten Bezugspunkt des Armanschlusses hinsichtlich seiner Lage an dem Armanschluss entspricht, und einem Bezugspunkt der Armverbindungsmittel, der dem zuvor genannten Bezugspunkt der Armverbindungsmittel hinsichtlich seiner Lage an den Armverbindungsmitteln entspricht, ein zweiter Abstand besteht, und dass der erste Abstand größer oder kleiner als der zweite Abstand ist. Es besteht zum Beispiel die Möglichkeit, dass sich der Bezugspunkt an dem Armanschluss des ersten Halterarms und der Bezugspunkt an dem Armanschluss des zweiten Halterarms jeweils an dem zweiten Längenabschnitt des betreffenden Halterarms oder an jeweils gleicher Stelle einer jeweiligen Klemmschelle des betreffenden Armanschlusses befinden.

Zur vorteilhaften Ausgestaltung der Halterbasis besteht die Möglichkeit, dass die Halterbasis einen ersten Schenkel und einen zweiten Schenkel aufweist, die sich zueinander, insbesondere rechtwinklig, abgewinkelt erstrecken, dass die Basishalterungsmittel den ersten Schenkel mit einer oder mehreren darin ausgebildeten Durchgangslöchern umfassen und dass die Durchgangsöffnungen der Basisverbindungsmittel in dem zweiten Schenkel ausgebildet sind. Gemäß einer bevorzugten Ausführungsform kann die Halterbasis einstückig aus einem Blechteil, vorzugsweise aus Edelstahl, gebildet sein, wobei das Blechteil an der Verbindung des ersten Schenkels mit dem zweiten Schenkel zur Erzielung ihrer Winkellage gebogen ist. Insofern könnte man die Halterbasis als Grundplatte bezeichnen. Bevorzugt ist, dass es sich bei den Durchgangslöchern um Langlöcher mit zueinander parallelen Lochlängsachsen handelt und dass die Durchgangslöcher in einer zu den Lochlängsachsen senkrechten Richtung voneinander beabstandet sind. Insbesondere in diesem Zusammenhang ist bevorzugt, dass das Haltersystem Befestigungselemente, wie zum Beispiel Dübel und/ oder Schrauben und/ oder Anker, aufweist zur Halterung der Halterbasis an einer Wand mittels der Basishalterungsmittel.

Die Erfindung betrifft des Weiteren die Verwendung eines Haltersystems, das einzelne oder mehrere der vorangehend beschriebenen Merkmale aufweist, zur Vertikalbegrünung einer Wand.

Gemäß einem weiteren Aspekt schlägt die Erfindung zur Lösung der gestellten Aufgabe ein Vertikalbegrünungssystem, insbesondere zur Vertikalbegrünung einer Wand mittels Kletterpflanzen, vor, wobei das Vertikalbegrünungssystem ein erfindungsgemäßes Haltersystem und zumindest eine Stützvorrichtung umfasst. Betreffend dadurch mögliche Wirkungen und Vorteile wird zunächst auf die vorangehende Beschreibung Bezug genommen. Eine Stützvorrichtung ist vorzugsweise dazu geeignet oder speziell dafür ausgebildet, um eine oder mehrere Kletterpflanzen bei ihrem Kletterwuchs zu stützen. Ein Vertikalbegrünungssystem oder dessen Stützvorrichtung kann daher auch als Kletterhilfe bezeichnet werden.

Auch hinsichtlich des Vertikalbegrünungssystems bestehen zahlreiche Möglichkeiten zur vorteilhaften Weiterbildung.

Als zweckmäßig wird angesehen, dass die Stützvorrichtung zumindest ein Stützelement, wie zum Beispiel einen Stab oder ein Rohr oder ein Seil, und/ oder zumindest eine Stützeinrichtung, wie zum Beispiel ein Gitter oder ein Netz, umfasst. Bei den Rohren kann es sich vorzugsweise um Rundrohre handeln. Bevorzugt ist, dass das Vertikalbegrünungssystem einen oder mehrere Halterarme aufweist, wobei dessen Armanschluss oder deren jeweiliger Armanschluss an einen, insbesondere lösbaren, festen oder losen Anschluss an ein Stützelement und/ oder an eine Stützeinrichtung angepasst ist. Zum Beispiel besteht die Möglichkeit, dass eine Klemmvorrichtung, wie bspw. eine Klemmschelle, des Armanschlusses zur Ermöglichung einer Klemmwirkung an einen Durchmesser eines Stabes oder eines Rohres oder eines Seiles der Stützvorrichtung angepasst ist.

Betreffend einen möglichen Gebrauchszustand ist bevorzugt, dass das Vertikalbegrünungssystem zumindest eine tragende Wand umfasst und dass ein oder mehrere Halter, aufweisend oder jeweils aufweisend eine Halterbasis und einen damit verbundenen Halterarm, an der Halterbasis an der Wand gehaltert sind und mittels des Armanschlusses an ein Stützelement oder an eine Stützeinrichtung mittels einer, insbesondere lösbaren, Anschlussverbindung, fest oder lose angeschlossen sind. Zur vorteilhaften Weiterbildung besteht die Möglichkeit, dass zwischen der Wand und der Halterbasis ein oder mehrere thermische Isolatoren angeordnet sind. Diese können aus einem Material hergestellt sein, das im Vergleich zu dem Material der Halterbasis eine geringere thermische Leitfähigkeit aufweist. Wenn bspw. die Halterbasis aus Edelstahl hergestellt ist, können zum Beispiel Isolatoren aus Kunststoff eingesetzt werden. Denkbar ist z. B. die Verwendung von Kunststoff-Distanzhülsen, durch die bei der Halterung der Halterbasis an einer tragenden Wand je ein Befestigungselement hindurchgeführt werden kann.

Es besteht die Möglichkeit, dass zumindest ein Halterarm an seinem Armanschluss an ein Stützelement, das nicht auf einem Boden steht, oder an eine Stützeinrichtung, die nicht auf einem Boden steht, angeschlossen ist und dass an einem Querschnitt des Halterarms eine in Vertikalrichtung gemessene Höhe größer als eine in Horizontalrichtung gemessene Breite ist. Alternativ oder kombinativ besteht die Möglichkeit, dass zumindest ein Halterarm an seinem Armanschluss an ein Stützelement, das auf einem Boden steht, oder an eine Stützeinrichtung, die auf einem Boden steht, angeschlossen ist und dass an einem Querschnitt des Halterarms eine in Vertikalrichtung gemessene Höhe kleiner als eine in Horizontalrichtung gemessene Breite ist.

Aus der Beschreibung wird deutlich, dass für das Haltersystem und für ein dieses umfassendes Vertikalbegrünungssystem zahlreiche Möglichkeiten bestehen. Das Haltersystem kann zum Beispiel eine Halterbasis und eine beliebige Anzahl von dazu passenden Halterarmen umfassen. Das Haltersystem kann, unabhängig von der Anzahl der Halterarme, eine gewünschte Anzahl von Halterbasen, also eine Halterbasis oder mehrere Halterbasen, umfassen. Auch besteht die Möglichkeit, dass das Haltersystem nur eine einzige Halterbasis und nur einen einzigen Halterarm umfasst, die als Bestandteile eines Halters lösbar miteinander verbindbar oder verbunden sind. Insofern kann es sich bei einem Haltersystem um die Bestandteile eines Halters, ob zerlegt oder verbunden, handeln.

### Kurze Beschreibung der Zeichnungen

Die Erfindung wird nachfolgend mit Bezug auf die beigefügten Figuren anhand von bevorzugten Ausführungsbeispielen beschrieben. Im Einzelnen zeigt:
- Fig. 1: perspektivisch ein erfindungsgemäßes Haltersystem gemäß einem ersten bevorzugten Ausführungsbeispiel, in zerlegtem Zustand;
- Fig. 2: perspektivisch ein erfindungsgemäßes Haltersystem gemäß einem zweiten bevorzugten Ausführungsbeispiel, in zusammengesetztem Zustand;
- Fig. 2a: das in Figur 2 gezeigte Haltersystem in dortiger Blickrichtung IIa, in Verbindung mit einem gestrichelt dargestellten Stützelement;
- Fig. 3: perspektivisch ein erfindungsgemäßes Haltersystem gemäß einem dritten bevorzugten Ausführungsbeispiel, in zusammengesetztem Zustand;
- Fig. 3a: das Haltersystem gemäß Figur 3 in dortiger Blickrichtung lila, in Verbindung mit einem gestrichelt dargestellten Stützelement;
- Fig. 4: eine im Vergleich zu Figur 3 vergrößerte Ansicht in Blickrichtung IV;
- Fig. 5: perspektivisch ein erfindungsgemäßes Vertikalbegrünungssystem gemäß einem ersten bevorzugten Ausführungsbeispiel, exemplarisch in einem ersten möglichen Gebrauchszustand mit vertikaler Ausrichtung eines Stützelements;
- Fig. 5a: das Vertikalbegrünungssystem gemäß Figur 5, exemplarisch in einem zweiten möglichen Gebrauchszustand mit horizontaler Ausrichtung eines Stützelementes,
- Fig. 6: eine Seitenansicht in Blickrichtung VI gemäß Figur 5, in der Darstellung ergänzt um eine jeweils geschnitten gezeigte Dämmung und Verputzschicht;
- Fig. 7: eine Draufsicht in Blickrichtung VII gemäß Figur 5, in der Darstellung ergänzt um eine jeweils geschnitten gezeigte Dämmung und Verputzschicht;
- Fig. 8: perspektivisch das in den Figuren 5 - 7 gezeigte Vertikalbegrünungssystem, exemplarisch in einem dritten möglichen Gebrauchszustand;
- Fig. 9: eine Seitenansicht in Blickrichtung IX gemäß Figur 8, in der Darstellung ergänzt um eine jeweils geschnitten gezeigte Dämmung und Verputzschicht;
- Fig. 10: eine Draufsicht in Blickrichtung X gemäß Figur 8, in der Darstellung ergänzt um eine jeweils geschnitten gezeigte Dämmung und Verputzschicht;
- Fig. 11: perspektivisch ein erfindungsgemäßes Haltersystem gemäß einem vierten bevorzugten Ausführungsbeispiel, in zusammengesetztem Zustand;
- Fig. 12: in einer Vergrößerung eine Explosionsansicht von Detail XII aus Figur 11;

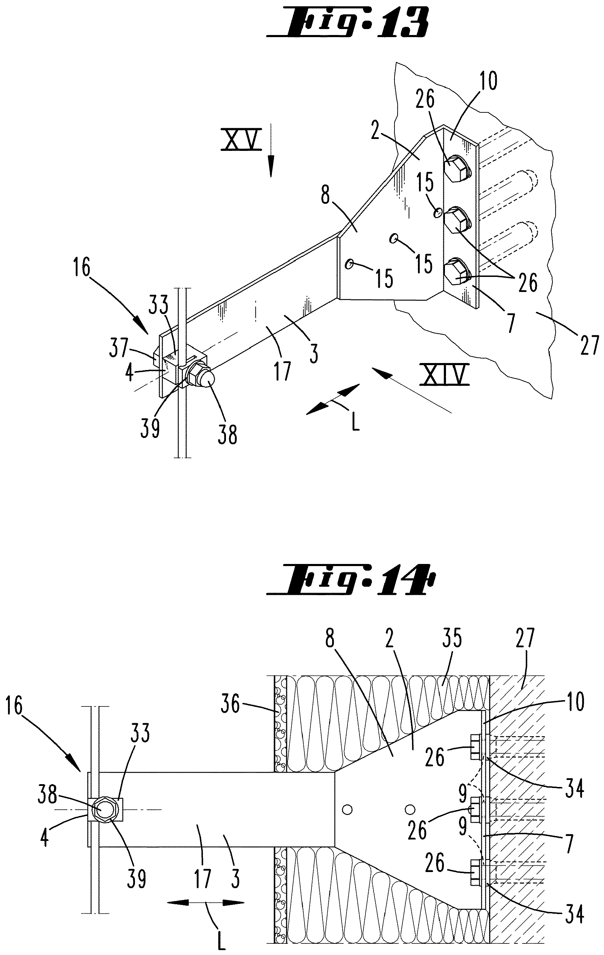

- Fig. 13: perspektivisch ein erfindungsgemäßes Vertikalbegrünungssystem gemäß einem zweiten bevorzugten Ausführungsbeispiel, welches das Haltersystem gemäß dem vierten Ausführungsbeispiel umfasst;
- Fig. 14: eine Seitenansicht in Blickrichtung XIV gemäß Figur 13, in der Darstellung ergänzt um eine jeweils geschnitten gezeigte Dämmung und Verputzschicht;

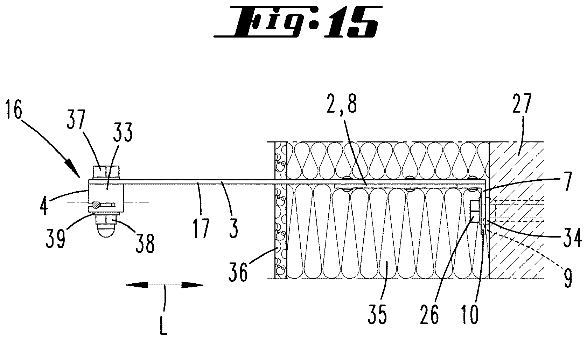

- Fig. 15: eine Draufsicht in Blickrichtung XV gemäß Figur 13, in der Darstellung ergänzt um eine jeweils geschnitten gezeigte Dämmung und Verputzschicht;
- Fig. 16: in einer Frontalansicht ein erfindungsgemäßes Vertikalbegrünungssystem gemäß einem dritten bevorzugten Ausführungsbeispiel;
- Fig. 17: in Vergrößerung einen Teilschnitt entlang Schnittlinie XVII-XVII in Figur 16 und
- Fig. 18: eine Ausschnittsvergrößerung von Detail XVIII aus Figur 17.

### Beschreibung der Ausführungsformen

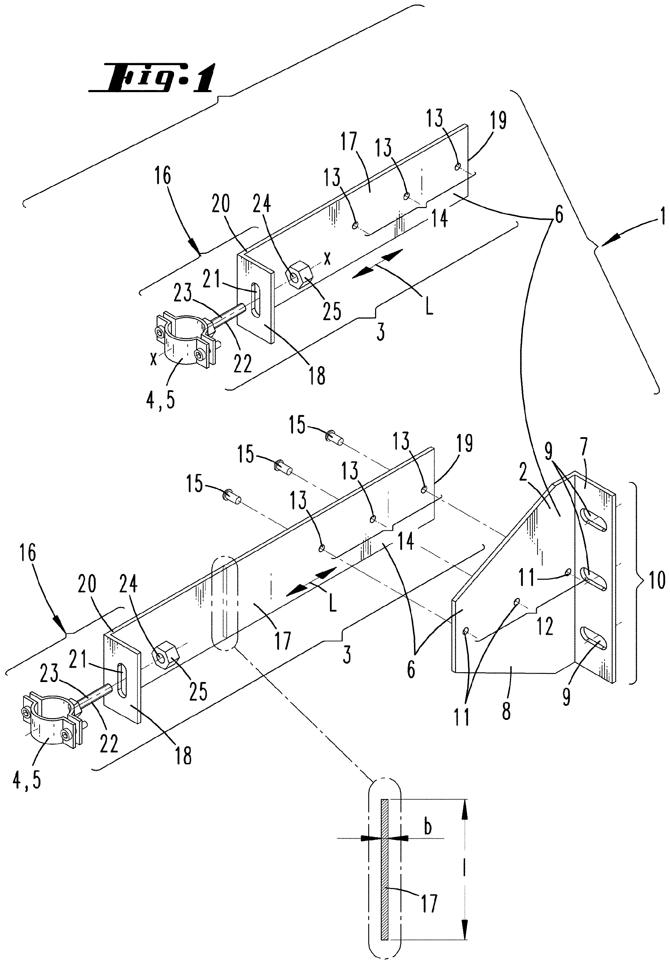

Mit Bezug auf Figur 1 wird ein erfindungsgemäßes Haltersystem 1 gemäß einem ersten bevorzugten Ausführungsbeispiel vorgestellt. In dem Beispiel umfasst das Haltersystem 1 eine Halterbasis 2, einen ersten Halterarm 3 und einen zweiten Halterarm 3, die sich in ihrer Länge unterscheiden und die vereinfachend mit gleichen Bezugszeichen bezeichnet werden. Dabei zeigt Figur 1 einen zerlegten Zustand des Haltersystems 1, wo deutlich erkennbar ist, dass es sich bei der Halterbasis 2 und bei den Halterarmen 3 um gesonderte Bauteile handelt. In dem Beispiel, d. h. nicht notwendig, umfasst jeder Halterarm 3 eine Klemmeinrichtung 4, bei der es sich im Beispiel um eine Klemmschelle 5 handelt, die in Figur 1 abgelöst dargestellt ist. Wie noch erläutert wird, kann die Halterbasis zur Befestigung an einer Wand dienen, die mittels eines Vertikalbegrünungssystems begrünt werden soll. Ein Vertikalbegrünungssystem, das ein erfindungsgemäßes Haltersystem umfassen kann, kann als Stützhilfe für Kletterpflanzen zum Beispiel Stäbe oder Rohre als Stützelemente enthalten, die an das freie Ende der Halterarme 3, in dem Beispiel mittels der Klemmschelle 5, anschließbar sind. Je nach Anforderungen kann der Abstand zwischen einer tragenden Wand und einer als Rankhilfe dienenden Stützvorrichtung, der in einem Vertikalbegrünungssystem von einem Halter überbrückt werden muss, unterschiedlich sein. Bei dem in Figur 1 gezeigten Haltersystem 1 besteht die Möglichkeit, von den beiden Halterarmen 3 einen zu einem gewünschten Wandabstand in der Länge passenden Halterarm 3 auszuwählen und mit der Halterbasis 2 zu einem Halter 6 zu verbinden. Bei dem in Figur 1 gezeigten Haltersystem 1 bestehen, wie die beiden Bezugszeichen 6 verdeutlichen, zwei solcher Auswahlmöglichkeiten, wobei sich die beiden je nach Auswahl ergebenden Halter 6 in dem Beispiel durch ihre Länge unterscheiden. Dabei bilden die Halterbasis 2 und ein gewählter Halterarm 3 Bestandteile eines jeweiligen Halters 6, wobei die Bestandteile ausgehend von dem in Figur 1 gezeigten zerlegten Zustand miteinander verbunden werden können.

In dem Beispiel ist die Halterbasis 2 als einstückiges Blechteil aus Edelstahl ausgeführt. Das Blechteil ist abgewinkelt, so dass es einen ersten Schenkel 7 und einen dazu rechtwinklig verlaufenden zweiten Schenkel 8 aufweist. Durch den ersten Schenkel 7 erstrecken sich drei, jeweils als Langloch geformte Durchgangslöcher 9, die mit dem ersten Schenkel 7 zur Halterung der Halterbasis 2 an einer tragenden Wand (in Fig. 1 nicht mit dargestellt) geeignete Basishalterungsmittel 10 bilden. In dem Beispiel erstrecken sich auch durch den zweiten Schenkel 8 drei Durchgangsöffnungen 11, die mit dem angrenzenden Wandbereich des zweiten Schenkels 8 Basisverbindungsmittel 12 bilden. Diese können zur Verbindung mit einem Halterarm 3 dienen. Jeder Halterarm 3 besitzt in dem Beispiel seinerseits drei Durchgangsöffnungen 13, die mit dem angrenzenden Wandbereich Armverbindungsmittel 14 bilden, zur Verbindung mit der Halterbasis 2. Das Lochbild der Durchgangsöffnungen 11 passt zu dem der Durchgangsöffnungen 13, so dass die Halterbasis 2 mit einem gewählten Halterarm 3 mittels Verbindungselementen 15, bei denen es sich in dem Beispiel um Nieten handelt, fest verbunden werden kann. In dem Beispiel sind die Abstände zwischen benachbarten Durchgangsöffnungen 11 gleich gewählt und entsprechen den Abständen zwischen benachbarten Durchgangsöffnungen 13. Dies ermöglicht es vorteilhaft, dass die Halterbasis 2 mit einem Halterarm 3 nicht nur in der in Figur 1 angedeuteten Weise verbunden werden kann, dass die beiden Lochbilder sich vollständig überdecken, sondern es besteht bei Bedarf auch die Möglichkeit, die beiden Lochbilder seitlich schrittweise zueinander zu versetzen, so dass bei Bedarf auch dadurch unterschiedliche Halterlängen erzielt werden können.

An demjenigen Längsende 20, das von den beiden Längsenden 19, 20 weiter von den Armverbindungsmitteln 14 entfernt ist, besitzt jeder Halterarm 3 einen Armanschluss 16, der zum Anschluss einer Stützvorrichtung (in Figur 1 nicht mit dargestellt), wie zum Beispiel eines Stabes oder eines Rohres, dienen kann. Aus Figur 1 wird deutlich, dass, wenn die Halterbasis 2 mit einem der Halterarme 3 verbunden ist, die Basishalterungsmittel 10 und der Armanschluss 16 an zueinander entgegengesetzten Längsenden des Halters 6 liegen.

In dem in Figur 1 gezeigten Beispiel besitzt jeder Halterarm 3 einen ersten Längenabschnitt 17 und einen zweiten Längenabschnitt 18, welche durch Abbiegen oder Abkanten eines Edelstahl-Flachprofils hergestellt sind. Beide Längenabschnitte 17, 18 verlaufen in sich geradlinig und zueinander in einem rechten Winkel. Die Armverbindungsmittel 14 sind an dem ersten Längenabschnitt 17 von einem ersten Längsende 19 ausgehend ausgebildet, während der Armanschluss 16 von dem entgegengesetzten zweiten Längsende 20 ausgeht. Die Querschnittsform des ersten Längenabschnittes 17 ist in dem zu seiner Längsrichtung L senkrechten Querschnitt ein Rechteck, wie Figur 1 in einer Detailvergrößerung zeigt. In dem Beispiel beträgt die Länge 1 des Querschnitts mehr als das 10-Fache seiner Breite b.

Der zweite Längenabschnitt 18 bildet einen Bestandteil des Armanschlusses 16. In dem Beispiel erstreckt sich durch den zweiten Längenabschnitt 18 eine langlochförmige Durchgangsöffnung 21. Figur 1 zeigt, dass ein Außengewinde 22 aufweisender Bolzen 23 der ebenfalls zu dem Armanschluss 16 gehörenden Klemmeinrichtung 4 durch die Durchgangsöffnung 21 hindurchgesteckt und die Klemmeinrichtung 4 mittels einer Innengewinde 24 aufweisenden Mutter 25 in einer gewählten Position und Drehlage befestigbar ist.

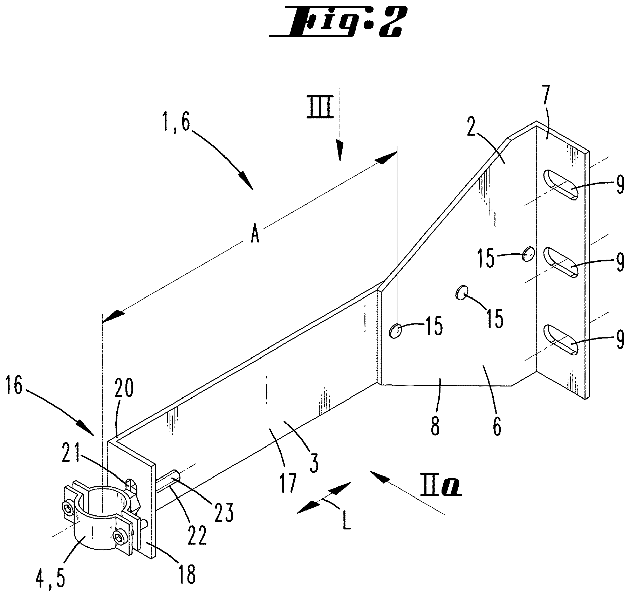

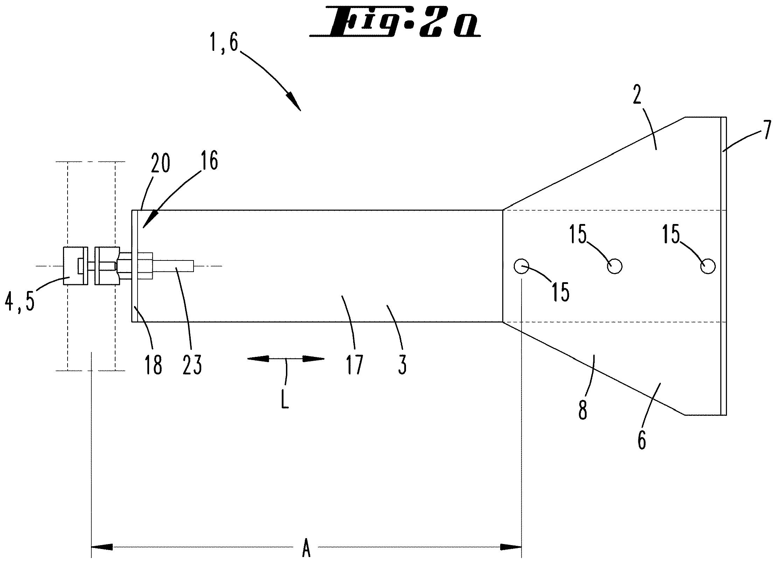

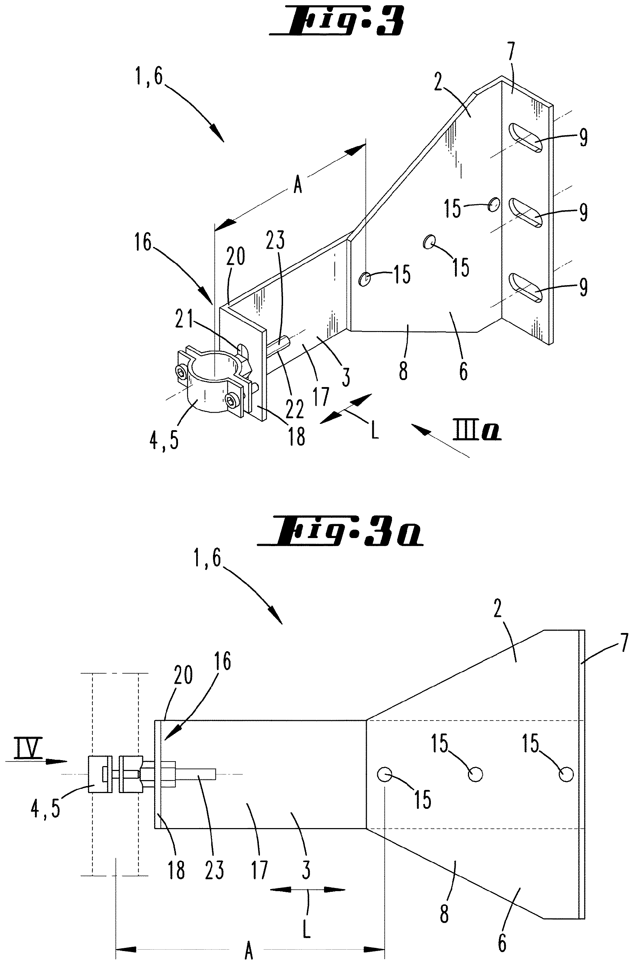

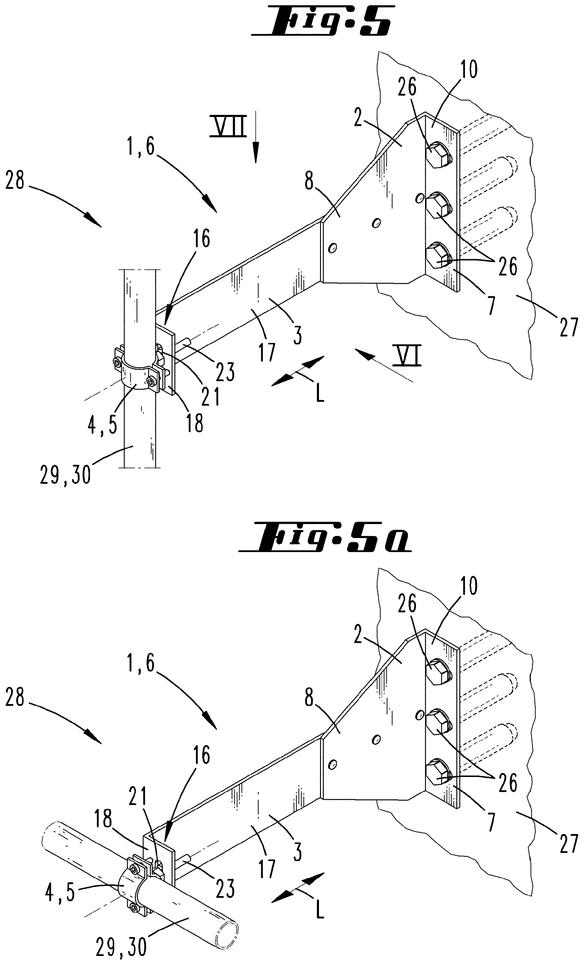

In dem Beispiel sind der Armanschluss 16 des längeren Halterarms 3 und der Armanschluss 16 des kürzeren Halterarms 3 zueinander gleich gestaltet. Im montierten Zustand der Klemmeinrichtung 4 resultiert aufgrund der vergleichsweise unterschiedlichen Länge der beiden zweiten Längenabschnitte 18, dass auch ein Abstand A zwischen einem an beiden Halterarmen 3 einheitlich gewählten Bezugspunkt (zum Beispiel der Mitte der Klemmeinrichtung 4) des Armanschlusses 16 und einem entsprechend gewählten Bezugspunkt an den Armverbindungsmitteln 14 bei dem längeren Halterarm 3 größer als bei dem kürzeren Halterarm 3 ist. Dies ist auch in den Figuren 2, 2a, 3 und 3a dargestellt, wobei der Abstand an den verschiedenen Halterarmen 3 vereinfachend mit dem einheitlichen Bezugszeichen A bezeichnet ist. Wie ergänzend bspw. den Figuren 5 - 7 entnehmbar ist, kann das Haltersystem 1 Befestigungselemente 26, wie zum Beispiel Dübel, Schrauben, Anker oder dergleichen aufweisen, die zur Halterung der Halterbasis 2 an einer tragenden Wand 27 mittels der Basishalterungsmittel 10 dienen können. Die Durchgangslöcher 9 und die Durchgangsöffnung 21 sind in dem Beispiel als Langlöcher ausgeführt. Dies ermöglicht vorteilhaft, Maßtoleranzen auszugleichen. In montiertem Zustand verläuft die Längsrichtung der Durchgangsöffnung 21 senkrecht zur Längsrichtung der Durchgangslöcher 9, so dass ein Ausgleich in zwei zueinander senkrechten Richtungen möglich ist.

In den Figuren 2, 2a ist exemplarisch ein erfindungsgemäßes Haltersystem 1 gemäß einem zweiten Ausführungsbeispiel dargestellt. Dieses umfasst nur eine Halterbasis 2 und nur einen Halterarm 3, die in dem gezeigten Gebrauchszustand mittels drei Nieten, die als Verbindungselemente 15 dienen, fest miteinander verbunden sind. Die Halterbasis 2 und der Halterarm 3 sind Bestandteile eines Halters 6. Da das Haltersystem 1 in dem Beispiel nur eine Halterbasis 2 und nur einen Halterarm 3 aufweist, handelt es sich bei dem Haltersystem 1 um den Halter 6. Im Vergleich zu Figur 1 sind in Figur 2 und in den nachfolgenden Figuren für entsprechende oder vergleichbare Einzelheiten die gleichen Bezugszeichen gewählt.

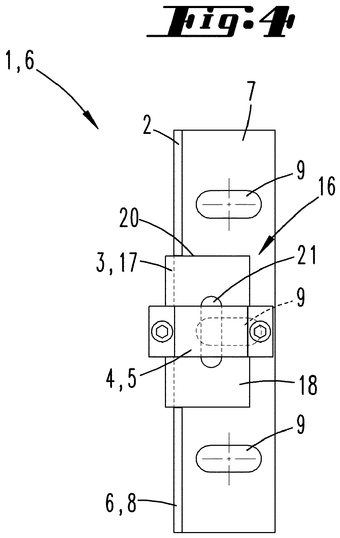

Die Figuren 3, 3a und 4 zeigen ein erfindungsgemäßes Haltersystem 1 gemäß einem dritten bevorzugten Ausführungsbeispiel. Im Vergleich zu den Figuren 2, 2a ist der Abstand A zwischen den Armanschlussmitteln 14 und dem Armanschluss 16 verkürzt.

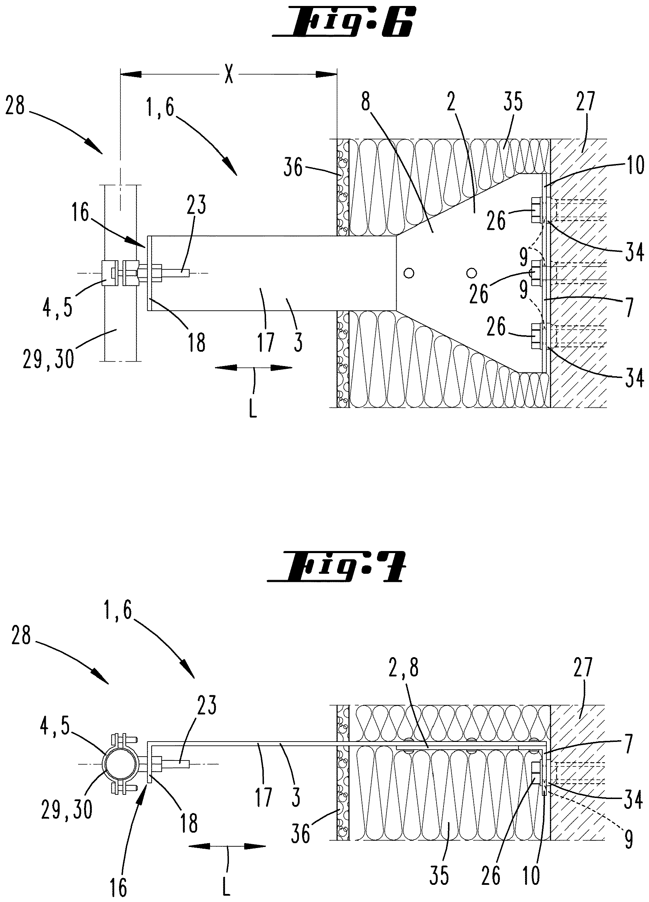

Mit Bezug auf die Figuren 5 - 7 wird ein erfindungsgemäßes Vertikalbegrünungssystem 28 gemäß einem ersten Ausführungsbeispiel vorgestellt. Es umfasst das erfindungsgemäß Haltersystem 1 gemäß dem beschriebenen zweiten Ausführungsbeispiel und drei als Befestigungselemente 26 dienende Schrauben, mittels denen der Halter 6 an einer tragenden Wand 27, bspw. mittels in den Figuren angedeuteter Dübel, gehaltert ist. Zusätzlich zu dem Haltersystem 1 umfasst das Vertikalbegrünungssystem 28 eine Stützvorrichtung 29, bei der es sich im Beispiel um ein in Figur 1 nur in einem Längenteilabschnitt gezeigtes Stützelement 30 in Gestalt eines Stabes handelt. Das Vertikalbegrünungssystem 28 kann zur Vertikalbegrünung der Wand 27 mittels Kletterpflanzen (in den Figuren nicht dargestellt) dienen. Der Armanschluss 16 des Halterarms 3 ist funktional an ein Anschließen des Stützelementes 30 angepasst. Dazu dient die an dem zweiten Längenabschnitt 18 angeschraubte Klemmschelle 5, die auf den Durchmesser des Stützelementes 30 abgestimmt ist und die durch Festziehen von zwei Schrauben zur Erzielung einer festen Klemmverbindung an dem Stab geeignet ist. In dem Beispiel ist das Stützelement 30, das zur Stützung von Kletterpflanzen dient, nicht auf einem Boden abgestützt. Daher ist das Stützelement 30 an dem Armanschluss 16 so fest an den Halter 6 angeklemmt bzw. angeschlossen, dass der Halter 6 das Stützelement 30 trägt und dessen Gewichtskraft in die tragende Wand 27 ableitet. Zur Erzielung einer möglichst großen Biegesteifigkeit des Halterarms 3 ist der Halter 6 in einer solchen Ausrichtung an der Wand 27 angebracht, dass an dem Halterarm 3 die Längsrichtung des Rechteckquerschnittes senkrecht orientiert ist. Somit ist die in Vertikalrichtung gemessene Höhe des Querschnittes größer als eine in Horizontalrichtung gemessene Breite. Der in dem Beispiel gewählte Stab kann auch als Tragstab bezeichnet werden. Die Halterbasis 2 lässt sich in dem Beispiel aufgrund ihrer Form auch als L-Profil oder Winkelprofil bezeichnen. An dem Halterarm 3 ist die Länge des ersten Längenabschnittes 17 um ein Vielfaches größer als die Länge des zweiten Längenabschnittes 18. Während Figur 5 vereinfachend nur den Halter 6 mit einem Längenabschnitt des hieran angeschlossenen Stützelementes 30, drei Befestigungselemente und schematisch einen Abschnitt einer tragenden Wand 27 zeigt, sind in den Figuren 6 und 7 exemplarisch weitere Einzelheiten eines Wandaufbaus gezeigt. In die tragende Wand 27 wurden drei Bohrungen eingebracht und darin jeweils ein Dübel eingesetzt. Die Halterbasis 2 ist mittels drei Befestigungselementen 26, bei denen es sich um zu den Dübeln passende Schrauben handelt, an der tragenden Wand 27 angeschraubt. Auf jedes der drei Befestigungselemente 26 ist je ein ringförmiger thermischer Isolator 34 aufgesteckt, der die Halterbasis 2 von der tragenden Wand 27 beabstandet und thermisch isoliert. An der Außenseite der tragenden Wand 27 ist eine schematisch dargestellte, insgesamt mit 35 bezeichnete Dämmung montiert. Die Abmessungen der Halterbasis 2 sind auf die Dicke der Dämmung 35 abgestimmt, so dass die Halterbasis 2 nicht über die Dämmung 35 nach außen hervorsteht, sondern so dass die Halterbasis 2 vollständig in der Dämmung 35 verschwindet. Auf die Außen- bzw. Sichtseite der Dämmung 35 ist eine Verputzschicht 36 aufgebracht, wobei es sich versteht, dass anstelle einer Verputzschicht auch eine andere Deckschicht gewählt sein könnte. Die Länge des Halters 6, also die sich in montiertem Zustand ergebende Gesamtlänge von Halterbasis 2 und Halterarm 3, ist so gewählt, dass der Halterarm 3 um eine gewünschte Länge aus dem mehrschichtigen Wandaufbau nach außen hervorsteht, so dass ein gewünschter Abstand X zwischen der Stützvorrichtung 29 (im Beispiel: dem Stützelement 30) und der Außenseite des Wandaufbaus resultiert. Dieser Abstand kann zum Beispiel im Bereich von 10 cm bis 20 cm liegen oder kleiner oder größer sein.

Es versteht sich, dass abweichend von den Figuren 5 - 7 auch andere Anwendungen möglich sind. So zeigt bspw. Figur 5a als Alternative zu Figur 5, dass der als Stützelement 29 gewählte Stab bei Bedarf so an den Halter 6 angeschlossen werden kann, dass er sich nicht vertikal, sondern horizontal oder in einer anderen gewünschten Richtung erstreckt. Auch versteht sich, dass verschiedene Weiterbildungen möglich sind. Zum Beispiel besteht die Möglichkeit, an den als Stützelement 30 gewählten Stab ein Gitter, ein Netz oder dergleichen anzubringen, das als Rankhilfe für Kletterpflanzen dienen kann.

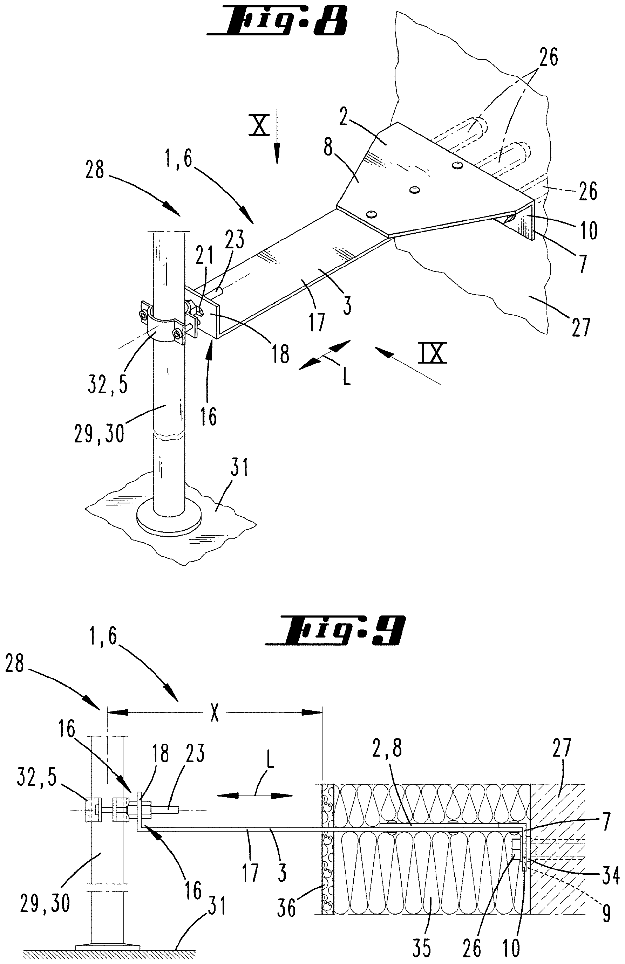

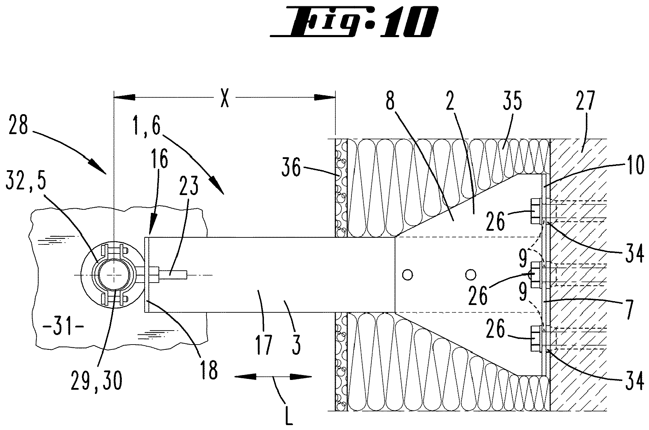

Die Figuren 8 - 10 zeigen das mit Bezug auf die Figuren 5 - 7 beschriebene Vertikalbegrünungssystem 28 exemplarisch in einem dritten möglichen Gebrauchszustand. Ein Unterschied zu den Figuren 5 - 7 ist, dass sich der als Stützelement 30 gewählte Stab, der vertikal angeordnet ist, nun auf einem Boden 31 abstützt, so dass seine Gewichtskraft direkt in den Boden 31 eingeleitet wird. Somit wird das Gewicht des Stützelementes 30 nicht von dem Halterarm 3 getragen. Das Stützelement 30 ist daher mittels der Klemmschelle 5 nur lose an den Halter 6 angeschlossen. Dazu sind die Schrauben der Klemmschelle 5 nur soweit eingedreht, dass der von den Backen der Klemmschelle 5 begrenzte Hohlquerschnitt in Figur 10 erkennbar größer als der Querschnitt des Stützelementes 30 ist. Das Stützelement 30 ist dabei gegen eine oder beide Klemmbacken der Klemmeinrichtung 4 nur lose angelehnt, so dass ein Umfallen des Stützelementes 30 vermieden wird. In dem Beispiel wird die Gewichtskraft des Stützelementes 30 nicht von dem Halter 6 in die Wand 27 übertragen. Daher wird an dem Halterarm 3 nur eine im Vergleich zu den Figuren 5 - 7 geringere Biegesteifigkeit benötigt. Dazu reicht es in dem Beispiel aus, dass der Halter 6 in einer Ausrichtung an der Wand 27 montiert ist, in der eine an dem Querschnitt des Halterarms 3 in Vertikalrichtung gemessene Höhe kleiner als eine in Horizontalrichtung gemessene Breite ist. Bei dem Beispiel der Figuren 8 - 10 dient die Klemmschelle 5 folglich für den Anschluss des Stabes nicht als Klemmeinrichtung, sondern als Anlehnhilfseinrichtung 32.

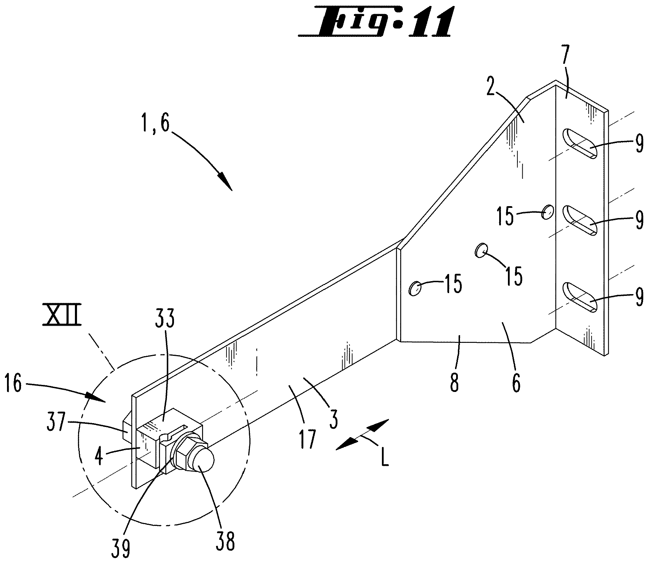

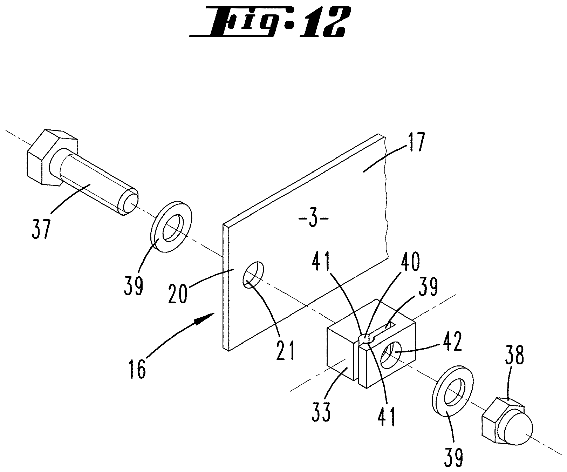

Die Figuren 11 und 12 zeigen ein erfindungsgemäßes Haltersystem 1 gemäß einem vierten Ausführungsbeispiel. Ein Unterschied zu den Ausführungsformen der Figuren 2 - 4 ist, dass der Armanschluss 16 als Klemmeinrichtung 4 keine Klemmschelle 5, sondern eine Seilklemmeinrichtung 33 aufweist. Eine mögliche Ausführung einer Seilklemmeinrichtung 33 ist in Figur 12 in einer Explosionsansicht gezeigt. Von dem Halterarm 3 ist das freie Längsende, das auch als zweites Längsende 20 bezeichnet wird, dargestellt. Da der bei den vorangehenden Ausführungsformen vorhandene zweite Längenabschnitt 18 fehlt, bildet der erste Längenabschnitt 17 an seinem zweiten Längsende 20 einen Bestandteil des Armanschlusses 16. Dazu ist benachbart zu dem zweiten Längsende 20 eine Durchgangsbohrung 21 vorgesehen, die mittels einer Schraube 37, einer Mutter 38 und Unterlegscheiben 39 zur Befestigung einer Seilklemmeinrichtung 33 dient. Diese besitzt einen an drei Seiten offenen Schlitz 39, der im Bereich einer Klemmaufnahme 40 zwei sich gegenüberliegende, konkave Auswölbungen 41 ausbildet. Der von diesen berandete längliche Hohlraum der Klemmaufnahme 40 kann zur Aufnahme eines Seils, oder alternativ bspw. eines Stabes, dienen. Quer zu einer geometrischen Ebene des Schlitzes 39 und quer zu der Längsrichtung der Klemmaufnahme 40 verläuft eine Durchgangsbohrung 42, durch die sich die Schraube 37 erstreckt.

Der Armanschluss 16 kann für einen Gebrauch vorbereitet werden, indem die in Figur 12 gezeigten Teile zunächst lose miteinander montiert werden, so dass in Richtung der Längsachse der Schraube 37 noch keine Klemmkraft auf die Seilklemmeinrichtung 33 wirkt. In diesem Zustand kann ein Seil oder bspw. ein Stab durch die Klemmaufnahme 40 hindurchgeführt werden, und anschließend kann die Schraube 37 bzw. die Mutter 38 zur Erzielung einer gewünschten Klemmkraft angezogen werden. Dies bewirkt, dass die Breite des Schlitzes 39 verringert und das Seil (oder der Stab) in der Klemmaufnahme 40 festgeklemmt wird. Abhängig davon, wie fest die Schraube 37 bzw. die Mutter 38 angezogen wird, kann die Seilklemmeinrichtung 33 entweder für eine bei den gegebenen Gebrauchsbedingungen ständig feste Klemmverbindung verwendet werden oder als Überlastsicherung dienen, die bei Überschreiben einer bestimmten Kraft, mit der an dem Seil bzw. an dem Stab (in Figur 12 nicht dargestellt) gezogen wird, eine Relativbewegung zulässt. Durch Anziehen der Schraube 37 oder der Mutter 38 mit einem Drehmomentschlüssel kann definiert werden, ab welcher Last ein Seil bzw. ein Stab nachrutschen kann.

Es versteht sich, dass auch Abwandlungen von der gezeigten Ausführungsform möglich sind. Zum Beispiel kann ein Längenabschnitt der Durchgangsbohrung 42 auf der von der Schraube 37 abgewandten Seite des Schlitzes 39 mit Innengewinde ausgestattet sein, so dass, falls gewünscht, eine Mutter 38 entfallen kann.

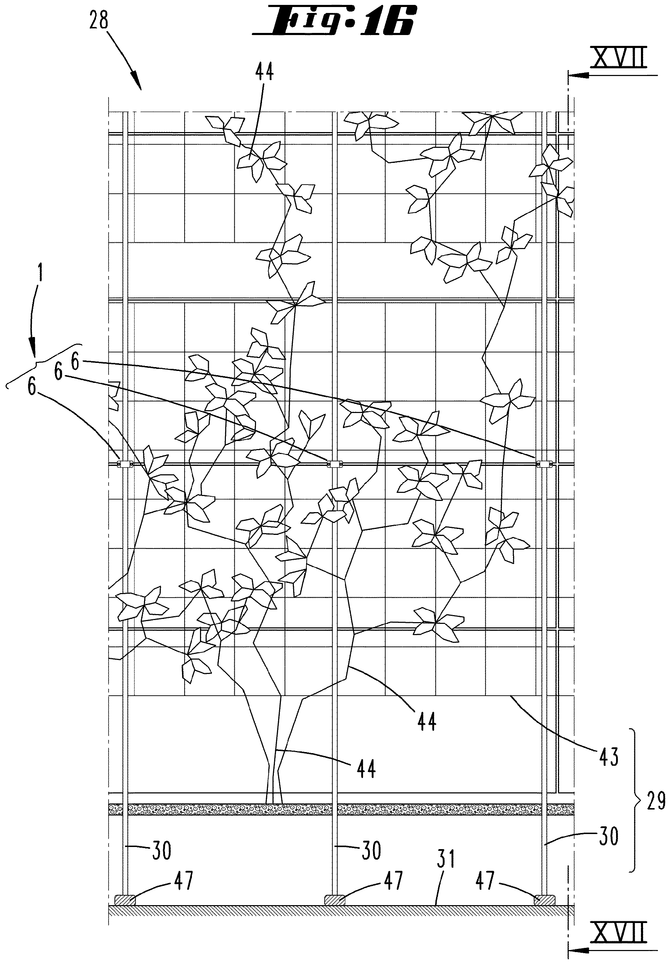

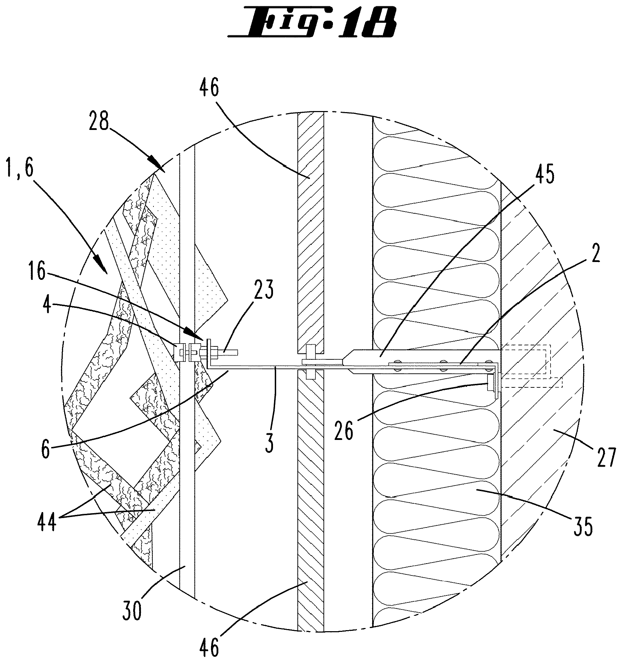

Mit Bezug auf die Figuren 16 - 18 wird ein erfindungsgemäßes Vertikalbegrünungssystem 28 gemäß einem dritten Ausführungsbeispiel vorgestellt. An die dortigen Stützelemente 30, bei denen es sich um vertikal ausgerichtete, in dem Boden 31 abgestützte Stäbe handelt, ist ein Gitter als Stützeinrichtung 43 angebracht. Die Stützelemente 30 und die Stützeinrichtung 43 sind Bestandteile einer Stützvorrichtung 29, die zum Stützen und somit als Kletterhilfe für in dem Boden 31 wurzelnde Kletterpflanzen 44 dient. Wie exemplarisch gezeigt, können die Stützelemente 29 mittels horizontaler Querstreben verbunden sein. Die Stützelemente 30 sind mittels eines erfindungsgemäßen Haltersystems 1, das in dem Beispiel mehrere Halterbasen 2 und mehrere Halterarme 3 umfasst, an einer tragenden Wand 27 in gewünschtem Wandabstand gehaltert. Je eine Halterbasis 2 und je ein daran befestigter Halterarm 3 sind Bestandteile eines jeweiligen Halters 6. Das Haltersystem 1 und die Stützvorrichtung 29 bilden gemeinsam das Vertikalbegrünungssystem 28.

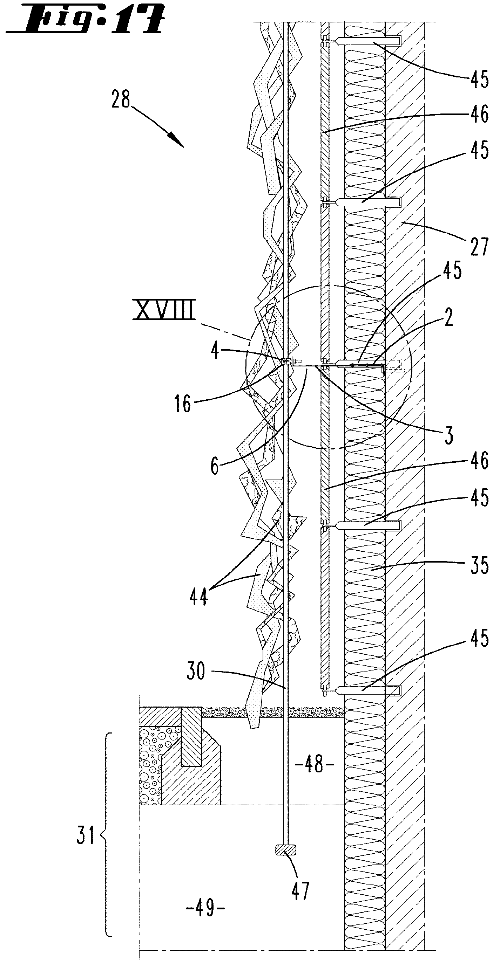

Figur 17 zeigt in einer entlang der Schnittlinie XVII-XVII aus Figur 16 verlaufenden Schnittansicht den mehrschichtigen Wandaufbau und das davor montierte Vertikalbegrünungssystem 28. Auf die tragende Wand 27 ist eine Dämmung 35 aufgebracht. Vor ihr befindet sich eine aus mehreren Fassadenelementen, die von Ankern 45 getragen werden, gebildete Fassade 46, die als hinterlüftete Fassade mit der Dämmung 35 einen Hohlraum berandet. Die auf dem Boden 31 stehenden Stützelemente 30 sind an die Innenseite von Klemmeinrichtungen 4 der Halterarme 3 angelehnt, also nicht fest eingespannt. Jedes Stützelement 30 reicht an seinem unteren Längsende durch eine Schicht aus Obersubstrat 48 hindurch bis in eine Schicht aus Untersubstrat 49, wo es auf einer Druckverteilerplatte 47 auf dem Boden 31 abgestützt ist. Die Halterarme 3 sind durch horizontale Fugen zwischen benachbarten Fassadenelementen der Fassade 46 hindurch geführt.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Ein Haltersystem 1, insbesondere zur Vertikalbegrünung einer Wand, wobei das Haltersystem 1 zumindest eine Halterbasis 2 und zumindest einen ersten Halterarm 3 aufweist, wobei die Halterbasis 2 und der erste Halterarm 3 gesonderte Bauteile sind, die lösbar oder fest miteinander zu einem Halter 6 verbindbar oder verbunden sind.

Ein Haltersystem 1, das dadurch gekennzeichnet ist, dass die Halterbasis 2 Basishalterungsmittel 10, mittels denen die Halterbasis 2 an einer Wand halterbar ist, und Basisverbindungsmittel 12 aufweist, dass der erste Halterarm 3 einen Armanschluss 16 und Armverbindungsmittel 14 aufweist, dass die Halterbasis 2 und der erste Halterarm 3 mittels der Basisverbindungsmittel 12 und der Armverbindungsmittel 14 miteinander zu dem Halter 6 verbindbar oder verbunden sind, so dass die Basishalterungsmittel 10 und der Armanschluss 16 voneinander beabstandet und insbesondere an zueinander entgegengesetzten Enden des Halters 6 angeordnet sind.

Ein Haltersystem 1, das dadurch gekennzeichnet ist, dass das Haltersystem 1 zumindest einen zweiten Halterarm 3 umfasst, der als gesondertes Bauteil ausgebildet ist und der einen Armanschluss 16 und Armverbindungsmittel 14 aufweist, dass die Halterbasis 2 und der zweite Halterarm 3 wahlweise zu dem ersten Halterarm 3 mittels der Basisverbindungsmittel 12 und der Armverbindungsmittel 14 lösbar oder fest miteinander zu einem Halter 6 verbindbar oder verbunden sind, so dass die Basishalterungsmittel 10 und der Armanschluss 16 voneinander beabstandet und insbesondere an zueinander entgegengesetzten Enden des Halters 6 angeordnet sind, wobei der erste Halterarm 3 und der zweite Halterarm 3 zueinander unterschiedlich ausgeführt sind und insbesondere zueinander unterschiedliche Armlängen aufweisen.

Ein Haltersystem 1, das dadurch gekennzeichnet ist, dass die Basisverbindungsmittel 12 einen Wandbereich der Halterbasis 2 mit einer oder mehreren darin ausgebildeten Durchgangsöffnungen 11 aufweisen, dass die Armverbindungsmittel 14 einen Wandbereich des Halterarms 3 mit einer oder mehreren darin ausgebildeten Durchgangsöffnungen 13 aufweisen und dass sich die Basisverbindungsmittel 12 und die Armverbindungsmittel 14 zueinander ausrichten lassen, so dass eine oder mehrere Durchgangsöffnungen 11 der Basisverbindungsmittel 12 mit je einer Durchgangsöffnung 13 der Armverbindungsmittel 14 überlappt oder überlappen.

Ein Haltersystem 1, das dadurch gekennzeichnet ist, dass das Haltersystem 1 Verbindungselemente 15 aufweist, mittels denen die Basisverbindungsmittel 12 und die Armverbindungsmittel 14 miteinander verbindbar oder verbunden sind, wobei es sich bei den Verbindungselementen 15 insbesondere um Nieten und/ oder um Schrauben mit Muttern handelt.

Ein Haltersystem 1, das dadurch gekennzeichnet ist, dass der erste Halterarm 3 und/ oder der zweite Halterarm 3 zumindest einen ersten Längenabschnitt 17 aufweist, an dem die Armverbindungsmittel 14 ausgebildet sind und dessen zu seiner Längsrichtung L senkrechter Querschnitt in zwei zueinander senkrechten Querschnittsrichtungen zueinander unterschiedliche Abmessungen hat, wobei insbesondere vorgesehen ist, dass die Querschnittsform ein Rechteck ist, dessen Länge 1 zumindest das Doppelte, insbesondere zumindest das Dreifache, insbesondere zumindest das Vierfache, insbesondere zumindest das Zehnfache, seiner Breite b beträgt, und/ oder wobei insbesondere vorgesehen ist, dass ein Längsende 20 des ersten Längenabschnitts 17, bei dem es sich um dasjenige von seinen beiden Längsenden 19, 20 handelt, das weiter von den Armverbindungsmitteln 14 entfernt ist, den Armanschluss 16 oder einen Bestandteil des Armanschlusses 16 bildet.

Ein Haltersystem 1, das dadurch gekennzeichnet ist, dass der erste Halterarm 3 und/ oder der zweite Halterarm 3 an einem Längsende 20, das von seinen Armverbindungsmitteln 14 beabstandet ist, einen zweiten Längenabschnitt 18 aufweist, der mit dem ersten Längenabschnitt 17 verbunden ist und der sich in Bezug zu dem ersten Längenabschnitt 18 abgewinkelt, insbesondere rechtwinklig abgewinkelt, erstreckt, und dass der zweite Längenabschnitt 18 den Armanschluss 16 oder einen Bestandteil des Armanschlusses 16 ausbildet, wobei es sich bei dem Längsende 20 insbesondere um das Längsende 20 handelt, das von den beiden Längsenden 19, 20 weiter von den Armverbindungsmitteln 14 entfernt ist.

Ein Haltersystem 1, das dadurch gekennzeichnet ist, dass der Armanschluss 16 eine oder mehrere Durchgangsöffnungen 21, die insbesondere in dem ersten Längenabschnitt 17 oder in dem zweiten Längenabschnitt 18 ausgebildet sind, aufweist und/ oder ein Innengewinde 24 und/ oder ein Außengewinde 22 aufweist und/ oder eine Klemmeinrichtung 4 insbesondere eine Klemmschelle 5 oder eine Seilklemmeinrichtung 33, aufweist und/ oder eine Anlehnhilfseinrichtung 32, aufweist.

Ein Haltersystem 1, das dadurch gekennzeichnet ist, dass der Armanschluss 16 des ersten Halterarms 3 und der Armanschluss 16 des zweiten Halterarms 3 zueinander gleich oder gleichartig gestaltet sind, dass an dem ersten Halterarm 3 zwischen einem Bezugspunkt des Armanschlusses 16 und den Armverbindungsmitteln 14 ein erster Abstand A besteht, dass an dem zweiten Halterarm 3 zwischen einem Bezugspunkt des Armanschlusses 16, der dem zuvor genannten Bezugspunkt hinsichtlich seiner Lage an dem Armanschluss 16 entspricht, und den Armverbindungsmitteln 14 ein zweiter Abstand A besteht, und dass der erste Abstand A größer oder kleiner als der zweite Abstand A ist.

Ein Haltersystem 1, das dadurch gekennzeichnet ist, dass die Halterbasis 2 einen ersten Schenkel 7 und einen zweiten Schenkel 8 aufweist, die sich zueinander, insbesondere rechtwinklig, abgewinkelt erstrecken, dass die Basishalterungsmittel 10 den ersten Schenkel 7 mit einer oder mehreren darin ausgebildeten Durchgangslöchern 9 umfassen und dass die Durchgangsöffnungen 11 der Basisverbindungsmittel 13 in dem zweiten Schenkel 8 ausgebildet sind.

Ein Haltersystem 1, das dadurch gekennzeichnet ist, dass das Haltersystem 1 Befestigungselemente 26, wie zum Beispiel Dübel und/oder Schrauben und/ oder Anker, aufweist zur Halterung der Halterbasis 2 an einer Wand 27 mittels der Basishalterungsmittel 10.

Eine Verwendung eines Haltersystems 1, das einzelne oder mehrere der vorangehend genannten Merkmale aufweist, zur Vertikalbegrünung einer Wand 27.

Ein Vertikalbegrünungssystem 28 zur Vertikalbegrünung einer Wand 27 mittels Pflanzen, wobei das Vertikalbegrünungssystem 28 eine Stützvorrichtung 29 und ein Haltersystem 1, das einzelne oder mehrere der vorangehend genannten Merkmale aufweist, umfasst.

Ein Vertikalbegrünungssystem 28, das dadurch gekennzeichnet ist, dass die Stützvorrichtung 29 zumindest ein Stützelement 30, wie zum Beispiel einen Stab oder ein Rohr oder ein Seil, und/ oder zumindest eine Stützeinrichtung 43, wie zum Beispiel ein Gitter oder ein Netz, umfasst.

Ein Vertikalbegrünungssystem 28, das dadurch gekennzeichnet ist, dass das Vertikalbegrünungssystem 28 einen oder mehrere Halterarme 3 aufweist, wobei dessen Armanschluss 16 oder deren jeweiliger Armanschluss 16 an einen, insbesondere lösbaren, festen oder losen Anschluss an ein Stützelement 30 und/ oder an eine Stützeinrichtung 43 angepasst ist.

Ein Vertikalbegrünungssystem 28, das dadurch gekennzeichnet ist, dass das Vertikalbegrünungssystem 28 zumindest eine tragende Wand 27 umfasst und dass ein oder mehrere Halter 6, aufweisend oder jeweils aufweisend eine Halterbasis 2 und einen damit verbundenen Halterarm 3, an der Halterbasis 2 an der Wand 27 gehaltert sind und mittels des Armanschlusses 16 an ein Stützelement 30 oder an eine Stützeinrichtung 43 mittels einer, insbesondere lösbaren, Anschlussverbindung 16, fest oder lose angeschlossen sind.

Ein Vertikalbegrünungssystem 28, das dadurch gekennzeichnet ist, dass zumindest ein Halterarm 3 an seinem Armanschluss 16 an ein Stützelement 30, das nicht auf einem Boden steht, oder an eine Stützeinrichtung 43, die nicht auf einem Boden steht, angeschlossen ist und dass an einem Querschnitt des Halterarms 3 eine in Vertikalrichtung gemessene Höhe größer als eine in Horizontalrichtung gemessene Breite ist.

Ein Vertikalbegrünungssystem 28, das dadurch gekennzeichnet ist, dass zumindest ein Halterarm 3 an seinem Armanschluss 16 an ein Stützelement 30, das auf einem Boden 31 steht, oder an eine Stützeinrichtung 43, die auf einem Boden 31 steht, angeschlossen ist und dass an einem Querschnitt des Halterarms 3 eine in Vertikalrichtung gemessene Höhe kleiner als eine in Horizontalrichtung gemessene Breite ist.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/ oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

### Liste der Bezugszeichen

| | | | |
|---|---|---|---|
| 1 | Haltersystem | 29 | Stützvorrichtung |
| 2 | Halterbasis | 30 | Stützelement |
| 3 | Halterarm | 31 | Boden |
| 4 | Klemmeinrichtung | 32 | Anlehnhilfseinrichtung |
| 5 | Klemmschelle | 33 | Seilklemmeinrichtung |
| 6 | Halter | 34 | Isolator |
| 7 | erster Schenkel | 35 | Dämmung |
| 8 | zweiter Schenkel | 36 | Verputzschicht |
| 9 | Durchgangsloch | 37 | Schraube |
| 10 | Basishalterungsmittel | 38 | Mutter |
| 11 | Durchgangsöffnung | 39 | Schlitz |
| 12 | Basisverbindungsmittel | 40 | Klemmaufnahme |
| 13 | Durchgangsöffnung | 41 | konkave Auswölbung |
| 14 | Armverbindungsmittel | 42 | Durchgangsbohrung |
| 15 | Verbindungselement | 43 | Stützeinrichtung |
| 16 | Armanschluss | 44 | Kletterpflanze |
| 17 | erster Längenabschnitt | 45 | Anker |
| 18 | zweiter Längenabschnitt | 46 | Fassade |
| 19 | erstes Längsende | 47 | Druckverteilerplatte |
| 20 | zweites Längsende | 48 | Obersubstrat |
| 21 | Durchgangsöffnung | 49 | Untersubstrat |
| 22 | Außengewinde | | |
| 23 | Bolzen | | |
| 24 | Innengewinde | b | Breite |
| 25 | Mutter | 1 | Länge |
| 26 | Befestigungselement | A | Abstand |
| 27 | tragende Wand | L | Längsrichtung |
| 28 | Vertikalbegrünungssystem | X | Abstand |

## Patentansprüche

1. Haltersystem (1) zur Vertikalbegrünung einer Wand, wobei das Haltersystem (1) zumindest eine Halterbasis (2) zur Halterung an einer Wand und zumindest einen ersten Halterarm (3) aufweist, wobei die Halterbasis (2) und der erste Halterarm (3) gesonderte Bauteile sind, die lösbar oder fest miteinander zu einem Halter (6) verbindbar oder verbunden sind.

2. Haltersystem (1) gemäß Anspruch 1, **dadurch gekennzeichnet, dass** die Halterbasis (2) Basishalterungsmittel (10), mittels denen die Halterbasis (2) an einer Wand halterbar ist, und Basisverbindungsmittel (12) aufweist, dass der erste Halterarm (3) einen Armanschluss (16) und Armverbindungsmittel (14) aufweist, dass die Halterbasis (2) und der erste Halterarm (3) mittels der Basisverbindungsmittel (12) und der Armverbindungsmittel (14) miteinander zu dem Halter (6) verbindbar oder verbunden sind, so dass die Basishalterungsmittel (10) und der Armanschluss (16) voneinander beabstandet und insbesondere an zueinander entgegengesetzten Enden des Halters (6) angeordnet sind.

3. Haltersystem (1) gemäß einem der vorangehenden Ansprüche, **dadurch gekennzeichnet, dass** das Haltersystem (1) zumindest einen zweiten Halterarm (3) umfasst, der als gesondertes Bauteil ausgebildet ist und der einen Armanschluss (16) und Armverbindungsmittel (14) aufweist, dass die Halterbasis (2) und der zweite Halterarm (3) wahlweise zu dem ersten Halterarm (3) mittels der Basisverbindungsmittel (12) und der Armverbindungsmittel (14) lösbar oder fest miteinander zu einem Halter (6) verbindbar oder verbunden sind, so dass die Basishalterungsmittel (10) und der Armanschluss (16) voneinander beabstandet und insbesondere an zueinander entgegengesetzten Enden des Halters (6) angeordnet sind, wobei der erste Halterarm (3) und der zweite Halterarm (3) zueinander unterschiedlich ausgeführt sind und insbesondere zueinander unterschiedliche Armlängen aufweisen.

4. Haltersystem (1) gemäß einem der vorangehenden Ansprüche, **dadurch gekennzeichnet, dass** die Basisverbindungsmittel (12) einen Wandbereich der Halterbasis (2) mit einer oder mehreren darin ausgebildeten Durchgangsöffnungen (11) aufweisen, dass die Armverbindungsmittel (14) einen Wandbereich des Halterarms (3) mit einer oder mehreren darin ausgebildeten Durchgangsöffnungen (13) aufweisen und dass sich die Basisverbindungsmittel (12) und die Armverbindungsmittel (14) zueinander ausrichten lassen, so dass eine oder mehrere Durchgangsöffnungen (11) der Basisverbindungsmittel (12) mit je einer Durchgangsöffnung (13) der Armverbindungsmittel (14) überlappt oder überlappen.

5. Haltersystem (1) gemäß einem der vorangehenden Ansprüche, **dadurch gekennzeichnet, dass** das Haltersystem (1) Verbindungselemente (15) aufweist, mittels denen die Basisverbindungsmittel (12) und die Armverbindungsmittel (14) miteinander verbindbar oder verbunden sind, wobei es sich bei den Verbindungselementen (15) insbesondere um Nieten und/ oder um Schrauben mit Muttern handelt.

6. Haltersystem (1) gemäß einem der vorangehenden Ansprüche, **dadurch gekennzeichnet, dass** der erste Halterarm (3) und/oder der zweite Halterarm (3) zumindest einen ersten Längenabschnitt (17) aufweist, an dem die Armverbindungsmittel (14) ausgebildet sind und dessen zu seiner Längsrichtung (L) senkrechter Querschnitt in zwei zueinander senkrechten Querschnittsrichtungen zueinander unterschiedliche Abmessungen hat, wobei insbesondere vorgesehen ist, dass die Querschnittsform ein Rechteck ist, dessen Länge (1) zumindest das Doppelte, insbesondere zumindest das Dreifache, insbesondere zumindest das Vierfache, insbesondere zumindest das Zehnfache, seiner Breite (b) beträgt, und/ oder wobei insbesondere vorgesehen ist, dass ein Längsende (20) des ersten Längenabschnitts (17), bei dem es sich um dasjenige von seinen beiden Längsenden (19, 20) handelt, das weiter von den Armverbindungsmitteln (14) entfernt ist, den Armanschluss (16) oder einen Bestandteil des Armanschlusses (16) bildet.

7. Haltersystem (1) gemäß einem der vorangehenden Ansprüche, **dadurch gekennzeichnet, dass** der erste Halterarm (3) und/oder der zweite Halterarm (3) an einem Längsende (20), das von seinen Armverbindungsmitteln (14) beabstandet ist, einen zweiten Längenabschnitt (18) aufweist, der mit dem ersten Längenabschnitt (17) verbunden ist und der sich in Bezug zu dem ersten Längenabschnitt (18) abgewinkelt, insbesondere rechtwinklig abgewinkelt, erstreckt, und dass der zweite Längenabschnitt (18) den Armanschluss (16) oder einen Bestandteil des Armanschlusses (16) ausbildet, wobei es sich bei dem Längsende (20) insbesondere um das Längsende (20) handelt, das von den beiden Längsenden (19, 20) weiter von den Armverbindungsmitteln (14) entfernt ist.

8. Haltersystem (1) gemäß einem der vorangehenden Ansprüche, **dadurch gekennzeichnet, dass** der Armanschluss (16) eine oder mehrere Durchgangsöffnungen (21), die insbesondere in dem ersten Längenabschnitt (17) oder in dem zweiten Längenabschnitt (18) ausgebildet sind, aufweist und/ oder ein Innengewinde (24) und/ oder ein Außengewinde (22) aufweist und/ oder eine Klemmeinrichtung (4) insbesondere eine Klemmschelle (5) oder eine Seilklemmeinrichtung (33), aufweist und/ oder eine Anlehnhilfseinrichtung (32), aufweist.

9. Haltersystem (1) gemäß einem der vorangehenden Ansprüche, **dadurch gekennzeichnet, dass** der Armanschluss (16) des ersten Halterarms (3) und der Armanschluss (16) des zweiten Halterarms (3) zueinander gleich oder gleichartig gestaltet sind, dass an dem ersten Halterarm (3) zwischen einem Bezugspunkt des Armanschlusses (16) und den Armverbindungsmitteln (14) ein erster Abstand (A) besteht, dass an dem zweiten Halterarm (3) zwischen einem Bezugspunkt des Armanschlusses (16), der dem zuvor genannten Bezugspunkt hinsichtlich seiner Lage an dem Armanschluss (16) entspricht, und den Armverbindungsmitteln (14) ein zweiter Abstand (A) besteht, und dass der erste Abstand (A) größer oder kleiner als der zweite Abstand (A) ist.

10. Haltersystem (1) gemäß einem der vorangehenden Ansprüche, **dadurch gekennzeichnet, dass** die Halterbasis (2) einen ersten Schenkel (7) und einen zweiten Schenkel (8) aufweist, die sich zueinander, insbesondere rechtwinklig, abgewinkelt erstrecken, dass die Basishalterungsmittel (10) den ersten Schenkel (7) mit einer oder mehreren darin ausgebildeten Durchgangslöchern (9) umfassen und dass die Durchgangsöffnungen (11) der Basisverbindungsmittel (13) in dem zweiten Schenkel (8) ausgebildet sind.

11. Haltersystem (1) gemäß einem der vorangehenden Ansprüche, **dadurch gekennzeichnet, dass** das Haltersystem (1) Befestigungselemente (26), wie zum Beispiel Dübel und/ oder Schrauben und/ oder Anker, aufweist zur Halterung der Halterbasis (2) an einer Wand (27) mittels der Basishalterungsmittel (10).

12. Haltersystem (1) gemäß einem der vorangehenden Ansprüche, **gekennzeichnet durch** eine Verwendung zur Vertikalbegrünung einer Wand (27).

13. Vertikalbegrünungssystem (28) zur Vertikalbegrünung einer Wand (27) mittels Kletterpflanzen, wobei das Vertikalbegrünungssystem (28) ein Haltersystem (1) und zumindest eine Stützvorrichtung (29) umfasst, **dadurch gekennzeichnet, dass** das Haltersystem (1) ein Haltersystem (1) gemäß einem der Ansprüche 1 - 12 ist.

14. Vertikalbegrünungssystem (28) gemäß Anspruch 13, **dadurch gekennzeichnet, dass** die Stützvorrichtung (29) zumindest ein Stützelement (30), wie zum Beispiel einen Stab oder ein Rohr oder ein Seil, und/ oder zumindest eine Stützeinrichtung (43), wie zum Beispiel ein Gitter oder ein Netz, umfasst.

15. Vertikalbegrünungssystem (28) gemäß einem der Ansprüche 13 -14, **dadurch gekennzeichnet, dass** das Vertikalbegrünungssystem (28) einen oder mehrere Halterarme (3) aufweist, wobei dessen Armanschluss (16) oder deren jeweiliger Armanschluss (16) an einen, insbesondere lösbaren, festen oder losen Anschluss an ein Stützelement (30) und/ oder an eine Stützeinrichtung (43) angepasst ist.

16. Vertikalbegrünungssystem (28) gemäß einem der Ansprüche 13 - 15, **dadurch gekennzeichnet, dass** das Vertikalbegrünungssystem (28) zumindest eine tragende Wand (27) umfasst und dass ein oder mehrere Halter (6), aufweisend oder jeweils aufweisend eine Halterbasis (2) und einen damit verbundenen Halterarm (3), an der Halterbasis (2) an der Wand (27) gehaltert sind und mittels des Armanschlusses (16) an ein Stützelement (30) oder an eine Stützeinrichtung (43) mittels einer, insbesondere lösbaren, Anschlussverbindung (16), fest oder lose angeschlossen sind.

17. Vertikalbegrünungssystem (28) gemäß einem der Ansprüche 13 - 16, **dadurch gekennzeichnet, dass** zumindest ein Halterarm (3) an seinem Armanschluss (16) an ein Stützelement (30), das nicht auf einem Boden steht, oder an eine Stützeinrichtung (43), die nicht auf einem Boden steht, angeschlossen ist und dass an einem Querschnitt des Halterarms (3) eine in Vertikalrichtung gemessene Höhe größer als eine in Horizontalrichtung gemessene Breite ist.

18. Vertikalbegrünungssystem (28) gemäß einem der Ansprüche 13 - 17, **dadurch gekennzeichnet, dass** zumindest ein Halterarm (3) an seinem Armanschluss (16) an ein Stützelement (30), das auf einem Boden (31) steht, oder an eine Stützeinrichtung (43), die auf einem Boden (31) steht, angeschlossen ist und dass an einem Querschnitt des Halterarms (3) eine in Vertikalrichtung gemessene Höhe kleiner als eine in Horizontalrichtung gemessene Breite ist.

19. Haltersystem (1) oder Vertikalbegrünungssystem (28), **gekennzeichnet durch** eines oder mehrere der kennzeichnenden Merkmale eines der vorhergehenden Ansprüche.
